# EUROPÄISCHE PATENTANMELDUNG

(11) **EP 4 516 707 A1**
(43) Veröffentlichungstag der Anmeldung: **05.03.2025**
(21) Anmeldenummer: 24196502.9
(22) Anmeldetag: 26.08.2024
(51) Int. Cl.: B65G 69/18

(54) **ENTLEERUNGSVORRICHTUNG ZUM ENTLEEREN EINES BEHÄLTERS**

(30) Priorität: 30.08.2023 DE 102023123337; 26.09.2023 DE 102023126027
(71) Anmelder: Hecht Technologie GmbH, 85276 Pfaffenhofen (DE)
(72) Erfinder: Schwaiger, Thomas, 85276 Pfaffenhofen/Ilm (DE)
(74) Vertreter: Kilian Kilian & Partner mbB

(57) **Zusammenfassung**

Die Erfindung betrifft eine Entleerungsvorrichtung (2) zum Entleeren eines ein Produkt (P) enthaltenden Behälters (F), umfassend:
einen Andockabschnitt (4) zum Andocken an einen zu entleerenden rigiden Behälter (F), insbesondere ein Fass, wobei in dem Andockabschnitt (4) ein Durchgang mit einer verstellbaren Dichteinrichtung (434) gebildet ist, wobei
der Durchgang derart über die Dichteinrichtung (434) verstellbar ist, dass ein Adapterstück (3), welches an einem das Produkt (P) umschließenden flexiblen Behältnis (L), insbesondere ein Liner oder ein Foliensack, im Inneren des rigiden Behälters (F) befestigt ist, derart innerhalb des Durchgangs fixierbar ist, dass ein durch den Andockabschnitt (4) und den rigiden Behälter (F) definierter abgeschlossener Innenraum gegenüber einer Außenumgebung abgedichtet ist.

## Beschreibung

Die vorliegende Erfindung betrifft eine Entleerungsvorrichtung zum Entleeren eines ein Produkt enthaltenden Behälters, ein Adapterstück sowie ein Verfahren zum Andocken einer Entleerungsvorrichtung an einen entsprechenden Behälter.

Pulver- oder granulatförmige Produkte, allgemein Schüttgüter, werden von herstellenden Unternehmen herkömmlicherweise zur Lagerung und zum Transport in Fässer abgefüllt. Darüber hinaus werden in vielen Industriezweigen, insbesondere der Lebensmittelindustrie sowie der Pharmaindustrie, hohe Reinheitsanforderungen an das in den Fässern enthaltene Schüttgut gestellt und die Schüttgüter bergen aufgrund von Toxizität nicht selten eine Gesundheitsgefährdung für die die Schüttgüter verarbeitenden Personen. Aus diesen Gründen müssen bei der Entleerung solcher Fässer Schutzmaßnahmen ergriffen werden.

Zum einen wird zum Schutz des Schüttgutes sowie der verarbeitenden Personen das in dem Fass vorhandene Schüttgut durch eine oder mehrere flexible Ummantelungen (sogenannte Foliensäcke/Liner) umschlossen. Hierdurch kann das Fass durch die das Fass verarbeitende Person zumindest gefahrlos geöffnet werden.

Zum anderen kommen bei der Entleerung solcher Fässer spezielle Vorrichtungen zum Einsatz, die sicherstellen, dass weder das Schüttgut durch Kontakt mit der Umgebung noch eine das Fass entleerende Person durch das Schüttgut kontaminiert wird.

Eine solche Vorrichtungen ist beispielsweise in der DE 10 2014 200 452 A1 gezeigt. Die Vorrichtung weist einen Isolator auf, an welchen ein zu entleerendes Fass angeschlossen werden kann und welcher einen gegenüber einer Außenumgebung abgeschlossenen Raum definiert. Nach Anschluss des Fasses kann die verarbeitende Person über Handschuheingriffe in den abgeschlossenen Raum eingreifen und den das Schüttgut umgebenden Foliensack/Liner ohne Kontaminationsgefahr innerhalb des Isolators öffnen.

Zur Entleerung des Foliensacks/Liners kann die Person anschließend eine zumindest teilweise innerhalb des Isolators vorgesehene Förderleitung in den geöffneten Foliensack/Liner einführen und das Schüttgut über eine pneumatische Förderung entnehmen bzw. absaugen.

Im Zusammenhang mit der vorstehend beschriebenen Konfiguration und Vorgehensweise ergeben sich jedoch eine Reihe von Problemen, die nachfolgend erläutert werden.

So ist das Anschließen des Fasses an den Isolator mit einer Vielzahl von Handgriffen verbunden und erfordert somit einen erheblichen Zeitaufwand. Weiterhin vergrößert der Isolator die Abmessungen der Entleerungsvorrichtung und hat hohe Anforderungen im Hinblick auf Dichtigkeit zur Vermeidung des Austritts von Material zu erfüllen. Darüber hinaus ist auch die Reinigung des Isolators mit hohem Aufwand verbunden, so dass mit dem Wechsel des zu leerenden Produkts ein erheblicher Zeitaufwand für die Reinigung einhergeht.

Vor diesem Hintergrund ist es Aufgabe der vorliegenden Erfindung, ein Entleerungssystem ohne Isolator zu schaffen, welches darüber hinaus eine gegenüber dem Stand der Technik einfachere und schnellere Handhabung bereitstellt.

Diese Aufgabe wird mit einer Entleerungsvorrichtung gemäß Patentanspruch 1, einem Adapterstück gemäß Patentanspruch 8 und einem Verfahren zum Entleeren gemäß Patentanspruch 15 gelöst. Bevorzugte Ausführungsformen sind Gegenstand der Unteransprüche.

*Eine erfindungsgemäße Entleerungsvorrichtung zum Entleeren eines ein Produkt enthaltenden Behälters, umfasst:*
*einen Andockabschnitt zum Andocken an einen zu entleerenden rigiden Behälter, insbesondere ein Fass, wobei in dem Andockabschnitt ein Durchgang mit einer verstellbaren Dichteinrichtung gebildet ist, wobei*
*der Durchgang derart über die Dichteinrichtung verstellbar ist, dass ein Adapterstück, welches an einem das Produkt umschließenden flexiblen Behältnis, insbesondere einem Liner oder einem Foliensack, im Inneren des rigiden Behälters befestigt ist, derart innerhalb des Durchgangs fixierbar ist, dass ein durch den Andockabschnitt und den rigiden Behälter definierter abgeschlossener Innenraum gegenüber einer Außenumgebung abgedichtet ist.*

Mit der erfindungsgemäßen Entleerungsvorrichtung werden insbesondere Behälter entleert, die ein pulver- und/oder granulatförmiges Produkt enthalten, das beispielsweise eine potentielle Gefährdung eines Anwenders darstellt, die Umgebung potentiell verunreinigen würde und/oder einen zu bewahrenden Reinheitsgrad aufweist.

Insbesondere ist der abgeschlossene Innenraum bevorzugt durch eine Innenwandung des rigiden Behälters, eine dem Inneren des rigiden Behälters zugewandte Fläche des Andockabschnitts und das Adapterstück definiert.

*Bevorzugt ist die Dichteinrichtung durch eine Blähdichtung gebildet, welche den Durchgang umläuft.*

Insbesondere umfasst die Dichteinrichtung bevorzugt ein flexibles Dichtelement, welches in Form einer Blähdichtung gebildet ist. Die Blähdichtung ist vorzugsweise torusförmig und aus einem elastischen Material gebildet. Weiterhin ist die Blähdichtung vorzugsweise an eine Druckluftversorgung angeschlossen, sodass der Luftdruck innerhalb der Blähdichtung erhöht werden kann. Darüber hinaus ist vorzugsweise eine Einstelleinrichtung, insbesondere ein Ventil, vorgesehen, über welche der Luftdruck innerhalb der Blähdichtung einstellbar ist. Bei Erhöhen des Luftdrucks dehnt sich die Blähdichtung vorzugsweise aus, so dass eine Ausdehnung der Blähdichtung zunimmt und diese an das Adapterstück gedrückt wird, wohingegen sie sich bei Erniedrigung des Luftdrucks vorzugsweise entspannt, so dass die Ausdehnung der Blähdichtung abnimmt. Mit anderen Worten ist der durch den Andockabschnitt definierte Durchgang auf diese Weise über die Dichteinrichtung verstellbar.

*Bevorzugt ist an dem Andockabschnitt eine Absaugeinrichtung vorgesehen, welche eingerichtet ist, einen Umgebungsdruck in dem abgeschlossenen Innenraum derart abzusenken, dass das flexible Behältnis zumindest abschnittsweise an einer Innenwandung des rigiden Behälters anliegt.*

Durch Erniedrigung des Luftdrucks innerhalb des abgeschlossenen Innenraums wird vorzugsweise eine flexible Außenhaut des flexiblen Behältnisses an die Innenwandung des rigiden Behälters angezogen. Auf diese Weise wird die flexible Außenhaut des flexiblen Behältnisses fixiert und eine Behinderung des Anwenders bei Entnahme des Produkts durch das flexible Behältnis wird vermieden. Dies verbessert insbesondere die Handhabung der Entleerungsvorrichtung.

*Bevorzugt umfasst die Entleerungsvorrichtung ferner eine Förderleitung, welche zur Entnahme des Produkts durch den Durchgang des Andockabschnitts sowie durch das Adapterstück hindurch in das das Produkt enthaltende flexible Behältnis einführbar ist.*

Vorzugsweise ist das das Produkt umschließende flexible Behältnis beim Einführen im Bereich des Durchgangs geöffnet, so dass das Produkt zugänglich ist.

*Bevorzugt umfasst der Andockabschnitt eine rigide Platte, welche an einer Öffnung des rigiden Behälters befestigbar ist, ein flexibles Verbindungselement und einen Durchgangsabschnitt, welcher den Durchgang bildet und die Dichteinrichtung aufnimmt, wobei*
*die rigide Platte und der Durchgangsabschnitt derart über das flexible Verbindungselement verbunden sind, dass Abweichungen in einem Abstand und*/*oder einer relativen Positionierung zwischen dem den Durchgang bildenden Durchgangsabschnitt und dem an dem flexiblen Behältnis befestigten Adapterstück beim Fixieren durch Verformung des flexiblen Verbindungselements ausgleichbar sind.*

Aufgrund der flexiblen Außenhaut des das Produkt umschließenden flexiblen Behältnisses ergeben sich Abweichungen in der zur Befestigung des Adapterstücks vorgesehenen Oberfläche des flexiblen Behältnisses. Darüber hinaus ergeben sich auch Abweichungen durch die individuelle Positionierung des Adapterstücks aufgrund der händischen Befestigung durch den Anwender. Diese Abweichungen können durch das flexible Verbindungselement ausgeglichen werden.

Darüber hinaus können bevorzugt auch Kräfte, die bei Entleerung auf die Dichteinrichtung und/oder den Anschlussabschnitt wirken, durch das flexible Verbindungselement aufgenommen werden.

*Bevorzugt bildet die rigide Platte einen weiteren Durchgang aus, an welchem eine weitere verstellbare Dichteinrichtung gebildet ist, wobei*
*der weitere Durchgang derart über die weitere Dichteinrichtung verstellbar ist, dass das flexible Verbindungselement innerhalb des weiteren Durchgangs zur Verbindung mit der rigiden Platte fixierbar ist.*

Somit kann das flexible Verbindungselement aus dem durch die rigide Platte gebildeten weiteren Durchgang entnommen werden. Dies erhöht die Modularität der Entleerungsvorrichtung und ist insbesondere im Zusammenhang mit der Reinigung der Entleerungsvorrichtung vorteilhaft. Insbesondere sind verschiedene Verbindungselemente in die Öffnung der rigiden Platte einbringbar. Weiterhin ist insbesondere die Möglichkeit der Entnahme des flexiblen Verbindungselements im Zusammenhang mit Reinigungsaspekten vorteilhaft.

Bevorzugt umfasst die weitere Dichteinrichtung ebenfalls ein flexibles Dichtelement, welches in Form einer Blähdichtung ausgebildet ist. Die Blähdichtung ist vorzugsweise torusförmig und aus einem elastischen Material gebildet. Weiterhin ist die Blähdichtung vorzugsweise an die Druckluftversorgung angeschlossen, sodass der Luftdruck innerhalb der Blähdichtung erhöht werden kann. Darüber hinaus ist vorzugsweise eine Einstelleinrichtung, insbesondere ein Ventil, vorgesehen, über welche der Luftdruck innerhalb der Blähdichtung einstellbar ist. Bei Erhöhen des Luftdrucks dehnt sich die Blähdichtung vorzugsweise aus, so dass eine Ausdehnung der Blähdichtung zunimmt und diese an das flexible Verbindungselement gedrückt wird, wohingegen sie sich bei Erniedrigung des Luftdrucks vorzugsweise entspannt, so dass die Ausdehnung der Blähdichtung abnimmt. Mit anderen Worten ist der durch die rigide Platte definierte weitere Durchgang auf diese Weise über die weitere Dichteinrichtung verstellbar.

*Bevorzugt weist die Entleerungsvorrichtung einen Halterungsrahmen auf, wobei*
*an dem Halterungsrahmen eine Versetzeinrichtung vorgesehen ist, welche eingerichtet ist, den Andockabschnitt entlang einer Längsachse des rigiden Behälters derart gegenüber dem rigiden Behälter zu versetzen, dass der Andockabschnitt einen geöffneten Zustand oder einen angedockten Zustand einnimmt.*

Vorzugsweise ist der Halterungsrahmen ferner eingerichtet, den rigiden Behälter während des Entleerens zu haltern.

Weitere bevorzugte Merkmale der erfindungsgemäßen Entleerungsvorrichtung werden im Rahmen der Ausführungsform beschrieben.

*Ein erfindungsgemäßes Adapterstück zum Befestigen an ein ein Produkt umschließendes flexiblen Behältnis, umfasst:*
*einen Befestigungsabschnitt, welcher an ein das Produkt umschließendes flexibles Behältnis, insbesondere einen Liner oder einen Foliensack, befestigbar ist, und*
*einen Dichtabschnitt, welcher eingerichtet ist, derart mit einer verstellbaren Dichteinrichtung eines Andockabschnitts einer Entleerungsvorrichtung zusammenzuwirken, dass eine abgeschlossene*/*abgedichtete Verbindung zwischen dem Dichtabschnitt und der Dichteinrichtung herstellbar ist.*

*Bevorzugt umfasst das Adapterstück ferner eine Klebstoffschicht zur Befestigung an einer Außenoberfläche des flexiblen Behältnisses.*

Die Klebstoffschicht kann beliebig sein, beispielsweise ein Haftklebstoff, ein thermischer Klebstoff oder ein durch UV-Strahlung auszuhärtender Klebstoff.

Die Klebstoffschicht dient vorzugsweise der Befestigung des Adapterstücks an dem flexiblen Behältnis.

*Bevorzugt ist die Klebstoffschicht auf einer an dem Befestigungsabschnitt befestigten Verschließfolie gebildet, welche radial nach außen über den Befestigungsabschnitt übersteht.*

Der überstehende Abschnitt der Verschließfolie bewirkt bevorzugt eine verbesserte Haftung/Befestigung des Adapterstücks an der Außenoberfläche des flexiblen Behältnisses, weil er sich flexibel an Falten und Krümmungen der flexiblen Außenoberfläche anpassen kann.

*Bevorzugt umfasst das Adapterstück ferner einen Trennabschnitt, welcher eingerichtet ist, das flexible Behältnis zumindest abschnittsweise aufzutrennen, um ein Inneres des flexiblen Behältnisses zum Entnehmen des Produkts zugänglich zu machen.*

Ein teilweises Durch-/Auftrennen hat vorzugsweise den Vorteil, dass der durchtrennte Teil am flexiblen Behältnis verbleibt.

*Bevorzugt definiert der Befestigungsabschnitt einen Durchgang, der so dimensioniert ist, dass der Trennabschnitt in den Durchgang des Befestigungsabschnitts einführbar und innerhalb des Durchgangs geführt ist.*

Vorzugsweise sind der Befestigungsabschnitt und der Trennabschnitt ringförmig ausgebildet. Vorzugsweise sind der Befestigungsabschnitt und der Trennabschnitt koaxial zueinander geführt. Bevorzugt ist ein Innendurchmesser des Durchgangs des Befestigungsabschnitts gleich oder geringfügig größer als ein Außendurchmesser des Trennabschnitts, so dass der Trennabschnitt gleitend innerhalb des Befestigungsabschnitts geführt ist. Weiterhin ist der Trennabschnitt aufgrund der Führung innerhalb des Befestigungsabschnitts bevorzugt derart gegenüber dem Befestigungsabschnitt bewegbar, dass der Trennabschnitt zum Auftrennen in das flexible Behältnis hineingestoßen werden kann.

Bevorzugt überspannt die Verschließfolie den durch den Befestigungsabschnitt definierten Durchgang vollständig und wird gemeinsam mit dem flexiblen Behältnis durchtrennt.

*Bevorzugt ist an dem Adapterstück eine schlauchförmige Folie befestigt, welche über eine Förderleitung, welche zur Entnahme des Produkts durch das Adapterstück hindurch in das das Produkt enthaltende flexible Behältnis einführbar ist, führbar ist und an einem an der Förderleitung ausgebildeten Trägerabschnitt befestigbar ist.*

Der Folienschlauch bildet in einem an dem Trägerabschnitt befestigten Zustand bevorzugt zusammen mit dem übrigen Adapterstück einen gegenüber der Außenumgebung abgedichteten Aufnahmeraum aus, in dem die Förderleitung zumindest abschnittsweise aufgenommen ist. Auf diese Weise verbleibt beim Entleeren aufgewirbeltes Produkt innerhalb des Aufnahmeraums und kann nicht an die Außenumgebung austreten. Durch Bilden des Aufnahmeraums im Zusammenwirken der Förderleitung, des Adapterstücks und des Folienschlauchs kann daher auf das Vorsehen eines Isolators verzichtet werden.

Bevorzugt erfolgt die Befestigung des Folienschlauchs am Trägerabschnitt kraftschlüssig. So wird der Folienschlauch bevorzugt über einen O-Ring in einer umlaufend auf dem Trägerabschnitt gebildeten Nut eingeklemmt.

Weitere bevorzugte Merkmale des erfindungsgemäßen Adapterstücks werden im Rahmen der Ausführungsform beschrieben.

*Das erfindungsgemäße Entleerungssystem zum Entleeren eines ein Produkt enthaltenden Behälters umfasst die erfindungsgemäße Entleerungsvorrichtung und das erfindungsgemäße Adapterstück.*

*Das erfindungsgemäße Verfahren zum Andocken einer Entleerungsvorrichtung an einen ein Produkt enthaltenden Behälter, umfasst die folgenden Schritte:*
*Einführen eines Adapterstücks in ein Inneres eines ein Produkt enthaltenden zu entleerenden rigiden Behälters, insbesondere ein Fass;*
*Befestigen des Adapterstücks an einem das Produkt umschließenden flexiblen Behältnis, insbesondere ein Liner oder ein Foliensack, im Inneren des rigiden Behälters,*
*Andocken eines Andockabschnitts an den zu entleerenden rigiden Behälter, wobei in dem Andockabschnitt ein Durchgang mit einer verstellbaren Dichteinrichtung gebildet ist, und*
*Verstellen der Dichteinrichtung derart, dass das Adapterstück derart innerhalb des Durchgangs fixierbar ist, dass ein durch den Andockabschnitt und den rigiden Behälter definierter abgeschlossener Innenraum gegenüber einer Außenumgebung abgedichtet ist.*

Im Folgenden wird eine bevorzugte Ausführungsform der erfindungsgemäßen Entleerungsvorrichtung unter Bezug auf die beigefügten Zeichnungen erläutert.
**Figur 1** zeigt eine perspektivische Ansicht eines erfindungsgemäßen Entleerungssystems.
**Figur 2** zeigt eine Schnittansicht des erfindungsgemäßen Entleerungssystems aus Fig. 1.
**Figur 3** zeigt eine perspektivische Ansicht des erfindungsgemäßen Andockabschnitts.
**Figur 4** zeigt eine Schnittansicht des erfindungsgemäßen Andockabschnitts aus Fig. 3.
**Figur 5** zeigt eine perspektivische Ansicht des erfindungsgemäßen Adapterstücks.
**Figur 6** zeigt eine perspektivische Ansicht, in welcher der Folienschlauch des erfindungsgemäßen Adapterstücks beispielhaft an der Förderleitung der erfindungsgemäßen Entleerungsvorrichtung befestigt ist.
**Figuren 7** **A bis J** zeigen das bestimmungsgemäße Verfahren zum Andocken der erfindungsgemäßen Entleerungsvorrichtung an ein das Produkt enthaltendes Fass unter Verwendung des erfindungsgemäßen Adapterstücks.

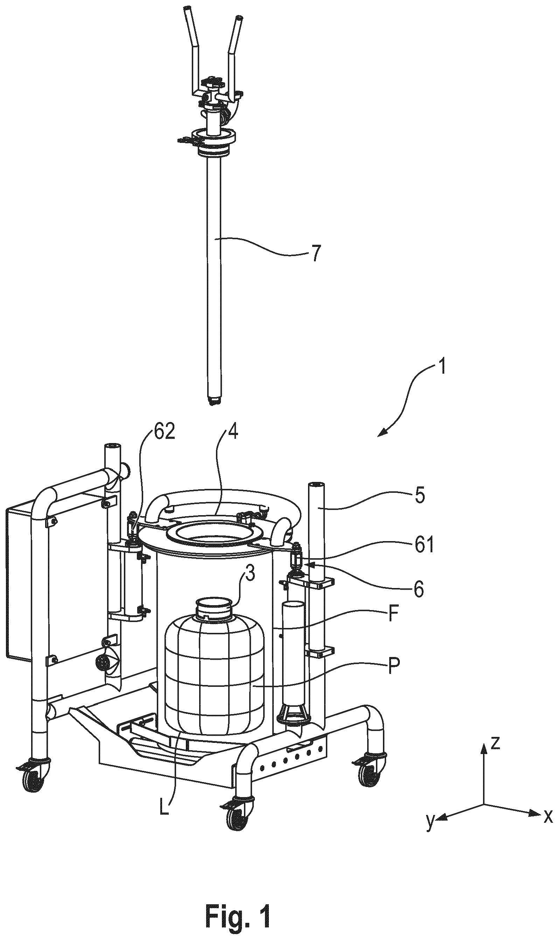

Figur 1 zeigt eine perspektivische Ansicht eines erfindungsgemäßen Entleerungssystems 1. Das Entleerungssystem 1 ist insbesondere für die Entleerung eines rigiden Behälters, beispielsweise eines Fasses F, vorgesehen, in dem ein Produkt P vorhanden ist. Das Fass F ist in Fig. 1 transparent dargestellt, so dass dessen Inhalt ersichtlich ist.

Das in dem Fass F enthaltene Produkt P ist insbesondere ein pulver- oder granulatförmiges Schüttgut. Das Produkt P ist innerhalb des Fasses F durch eine oder mehrere flexible Ummantelungen, sogenannte Foliensäcke/Liner L, umschlossen.

Das erfindungsgemäße Entleerungssystem 1 ist vorzugsweise eingerichtet, das in dem Fass F enthaltene Produkt P aus dem Fass F zu entnehmen.

Die in Fig. 1 gezeigte Z-Richtung entspricht einer Höhenrichtung des Entleerungssystems 1, die in Fig. 1 gezeigte X-Richtung entspricht einer Breitenrichtung des Entleerungssystems 1 und die in Fig. 1 gezeigte Y-Richtung entspricht einer Tiefenrichtung des Entleerungssystems 1.

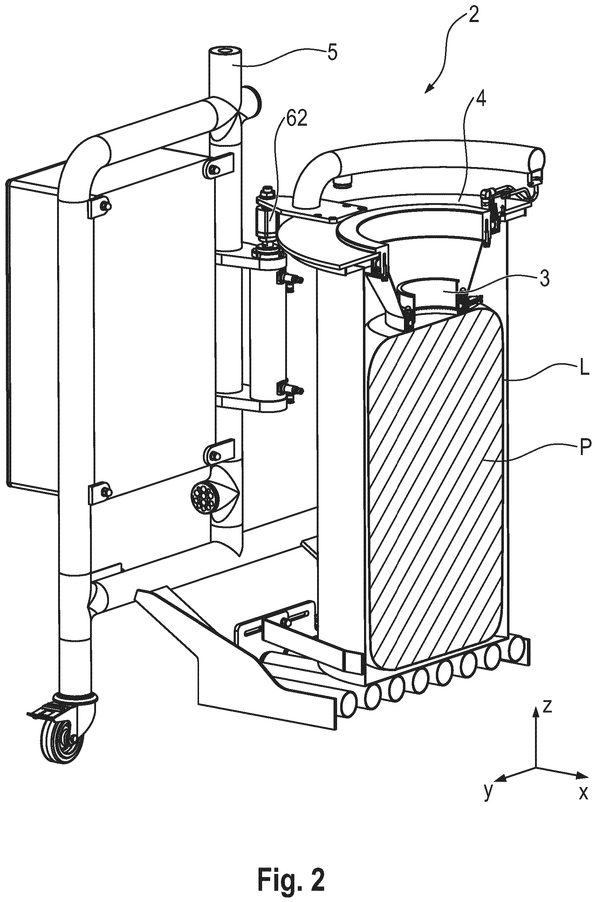

Figur 2 zeigt eine Schnittansicht des erfindungsgemäßen Entleerungssystems 1 aus Fig. 1, wobei der Schnitt auf ungefähr halber Breite der Entleerungsvorrichtung 2 in Breitenrichtung X erfolgte. Folglich entspricht die in Fig. 2 gezeigte Ansicht der Y-Z-Ebene.

Das Entleerungssystem 1 umfasst eine Entleerungsvorrichtung 2 und ein Adapterstück 3.

Die Entleerungsvorrichtung 2 umfasst einen Andockabschnitt 4, einen Halterungsrahmen 5, eine Versetzeinrichtung 6 und eine Förderleitung 7, welche lediglich in Fig. 1 gezeigt ist.

Bevorzugt wird die erfindungsgemäße Entleerungsvorrichtung 2 an einem gewünschten Ort aufgestellt. Diesbezüglich weist der Halterungsrahmen 5 vorzugsweise Rollen auf.

In der in Fig. 1 dargestellten Ausführungsform wird der Halterungsrahmen 5 im Wesentlichen durch Rohre oder Hohlprofilen aus Normalstahl oder Edelstahl gebildet. Der Halterungsrahmen 5 nimmt vorzugsweise auch das zu entleerende Fass F auf und umfasst bevorzugt entsprechende Mittel zur Positionierung und Fixierung des Fasses F. Die Mittel zur Positionierung und Fixierung ermöglichen bevorzugt, dass Fass F insbesondere in Breitenrichtung X und Tiefenrichtung Y bestimmungsgemäß zu positionieren und zu fixieren.

Der Andockabschnitt 4, welcher nachfolgend im Detail erläutert wird, ist bevorzugt über die Versetzeinrichtung 6 derart entlang einer Längsachse des Fasses F gegenüber dem Fass F versetzbar, dass dieser einen geöffneten Zustand oder einen angedockten Zustand einnehmen kann. Die Figuren 1 und 2 veranschaulichen jeweils den angedockten Zustand. Der geöffnete Zustand ist bevorzugt ein Zustand in dem der Andockabschnitt 4 durch die Versetzeinrichtung 6 nach oben versetzt ist und somit nicht auf dem Fass F aufliegt. In dem geöffneten Zustand kann das Fass F vorzugsweise nach Entleerung aus dem Halterungsrahmen 5 entnommen werden und anschließend ein neues zu entleerendes Fass F eingesetzt/aufgenommen werden.

Die Versetzeinrichtung 6 umfasst bevorzugt zwei Pneumatikzylinder 61 bzw. 62. Diese Pneumatikzylinder 61 und 62 sind bevorzugt an einen Druckluftanschluss angeschlossen und über eine nicht gezeigte Steuereinrichtung ansteuerbar. Die Versetzeinrichtung ist nicht auf die Anzahl von zwei Pneumatikzylindern beschränkt. So können alternativ auch mehrere, beispielsweise drei oder vier, Pneumatikzylinder oder lediglich ein Pneumatikzylinder vorgesehen sein.

Jeweils ein erstes Ende der Pneumatikzylinder 61 bzw. 62 ist vorzugsweise über Befestigungselemente an dem Halterungsrahmen 5 befestigt. Das jeweils andere Ende ist vorzugsweise mit dem Andockabschnitt 4 verbunden. Der Andockabschnitt 4 kann darüber hinaus vorzugsweise linear entlang der Längsachse des Fasses F versetzbar am Halterungsrahmen 5 gelagert sein.

In der gezeigten Ausführungsform werden die Pneumatikzylinder 61 und 62 durch Luftzufuhr über den Druckluftanschluss bevorzugt ausgefahren und somit wird der Andockabschnitt 4 in den geöffneten Zustand versetzt. Bei Luftentnahme, fahren die Pneumatikzylinder 61 und 62 hingegen wieder ein und somit wird der Andockabschnitt 4 in den angedockten Zustand versetzt.

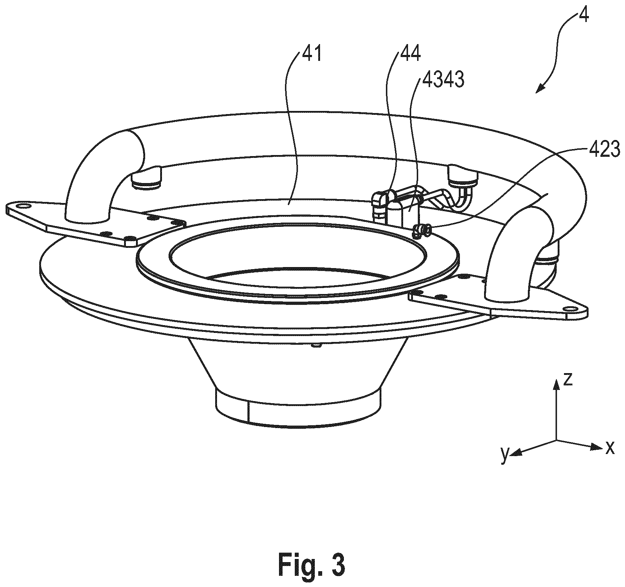

Figur 3 zeigt eine perspektivische Ansicht des Andockabschnitts 4.

Der Andockabschnitt 4 umfasst vorzugsweise eine rigide Platte 41, welche an einer Öffnung des Fasses F befestigbar ist. Insbesondere kann die rigide Platte 41 dichtend durch die Versetzeinrichtung 6 auf einen oberen Rand des zu entleerenden Fasses F gesetzt/gedrückt werden. Diesbezüglich ist vorzugsweise ein geeignetes Dichtmittel, insbesondere eine Dichtlippe oder im konkret dargestellten Fall eine Schaumstoffplatte, an der rigiden Platte 41 vorgesehen.

In der gezeigten Ausführungsform ist die rigide Platte 41 kreisförmig gebildet und umfasst im Zentrum eine ebenso kreisförmige Öffnung. Mit anderen Worten ist die rigide Platte 41 ringförmig gebildet.

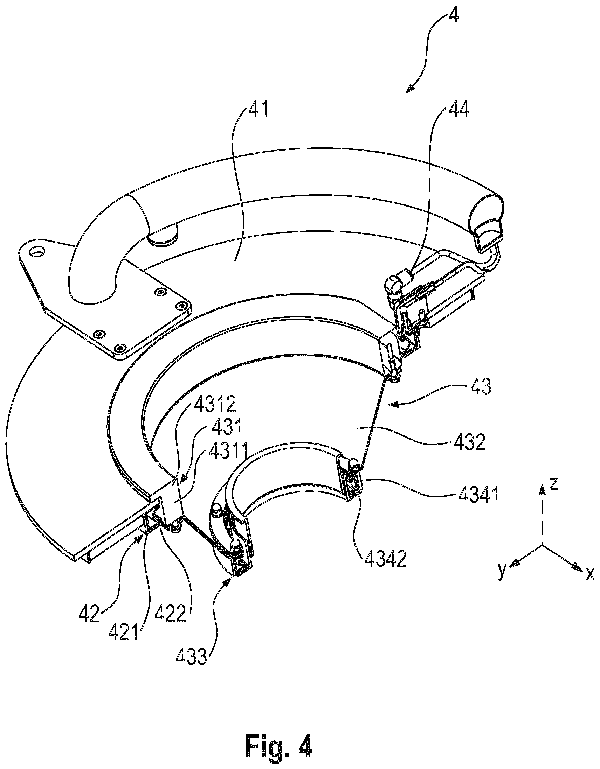

Figur 4 zeigt eine Schnittansicht des erfindungsgemäßen Andockabschnitts 4 aus Fig. 3, wobei der Schnitt auf ungefähr halber Breite der rigiden Platte 41 in Breitenrichtung X erfolgte. Folglich entspricht auch die in Fig. 4 gezeigte Ansicht der Y-Z-Ebene.

Wie in Fig. 4 gezeigt, umfasst der Andockabschnitt 4 vorzugsweise eine erste Dichteinrichtung 42. In der vorliegenden Ausführungsform ist die erste Dichteinrichtung 42 vorzugsweise durch einen Dichtring 421 gebildet.

Der Dichtring 421 ist bevorzugt an einer dem Fass F zugewandten unteren Seite der rigiden Platte 41 in ein Inneres des Fasses F hineinragend befestigt und umläuft eine innere Kontur der Öffnung der rigiden Platte 41. Alternativ kann der Dichtring 421 auch innerhalb der Öffnung der rigiden Platte 41 eingesetzt sein, so dass dieser einen Durchmesser der Öffnung verkleinert.

Innerhalb des Dichtrings 421 ist vorzugsweise ein verstellbares Dichtelement 422 angeordnet. Das verstellbare Dichtelement 422 ist in der gezeigten Ausführungsform vorzugsweise durch eine torusförmige Blähdichtung gebildet.

Weiterhin umfasst die erste Dichteinrichtung 42 einen Pumpenanschluss 423 (vgl. Fig. 3), über welchen Luft in die Blähdichtung eintreten oder austreten kann. Diesbezüglich ist der Pumpenanschluss 423 vorzugsweise ebenfalls an die Druckluftversorgung angeschlossen, sodass der Luftdruck innerhalb der Blähdichtung erhöht werden kann. Darüber hinaus umfasst die erste Dichteinrichtung 42 eine nicht gezeigte Einstelleinrichtung, über welche der Luftdruck innerhalb der Blähdichtung einstellbar ist. Bei Erhöhen des Luftdrucks dehnt sich die Blähdichtung vorzugsweise aus, so dass eine Ausdehnung der Blähdichtung zunimmt, wohingegen sie sich bei Erniedrigung des Luftdrucks vorzugsweise entspannt, so dass die Ausdehnung der Blähdichtung abnimmt. Mit anderen Worten ist die den Durchgang bildende Öffnung auf diese Weise über die erste Dichteinrichtung 42 verstellbar. Die erste Dichteinrichtung 42 ist ein Beispiel für die erfindungsgemäße weitere Dichteinrichtung. Die erste Dichteinrichtung 42 ist ein optionaler Bestandteil des Andockabschnitts 4.

Weiterhin umfasst der Andockabschnitt 4 vorzugsweise ein flexibles Verbindungselement 43. Das flexible Verbindungselement 43 ist bevorzugt ausgehend von einer dem Inneren des Fasses F abgewandten oberen Seite der rigiden Platte 41 in die Öffnung der rigiden Platte 41 einsetzbar und umfasst bevorzugt einen Einsetzabschnitt 431, einen flexiblen Verbindungsabschnitt 432 sowie einen Durchgangsabschnitt 433.

Der Einsetzabschnitt 431 ist vorzugsweise in die Öffnung der rigiden Platte 41 einsetzbar. Bevorzugt umfasst der Einsetzabschnitt 431 einen ringförmigen Abschnitt 4311, welcher gleitend in der dem Fass F zugewandten Richtung in die Öffnung der rigiden Platte 41 einsetzbar ist und in einem eingesetzten Zustand zumindest abschnittsweise an die erste Dichteinrichtung 42 angrenzt. Weiterhin umfasst der Einsetzabschnitt 431 an einer dem Fass F bestimmungsgemäß abgewandten Seite vorzugsweise einen Flansch 4312, welcher derart radial in Bezug auf den ringförmigen Abschnitt 4311 bzw. die Öffnung der rigiden Platte 41 übersteht, dass sich eine der oberen Seite der rigiden Platte 41 zugewandte Fläche des Flansches 4312 und die obere Seite der rigiden Platte 41 zumindest abschnittsweise überdecken. Auf diese Weise liegt der Flansch 4312 im eingesetzten Zustand auf der oberen Seite der rigiden Platte 41 auf und hält den Einsetzabschnitt 431 bzw. das flexible Verbindungselement 43 in Position. Durch Erhöhung des Luftdrucks innerhalb der Blähdichtung der ersten Dichteinrichtung 42, dehnt sich diese aus und wird an den angrenzenden ringförmigen Abschnitt 4311 gedrückt. Auf diese Weise ist eine dichtende Verbindung zwischen der rigiden Platte 41 und dem flexiblen Verbindungselement 43 herstellbar. Durch Erniedrigung des Luftdrucks innerhalb der Blähdichtung entspannt sich diese und das flexible Verbindungselement 43 kann aus der Öffnung der rigiden Platte 41 entnommen werden. Auf diese Weise sind verschiedene Verbindungselemente 43 in die Öffnung der rigiden Platte 41 einbringbar, so dass eine erhöhte Modularität gegeben ist. Weiterhin ist die Möglichkeit der Entnahme des flexiblen Verbindungselements 43 insbesondere im Zusammenhang mit Reinigungsaspekten vorteilhaft.

An der dem Fass F zugewandten Seite des Einsetzabschnitts 431 ist vorzugsweise der flexible Verbindungsabschnitt 432 befestigt/aufgenommen. Der flexible Verbindungsabschnitt 432 besteht bevorzugt aus einem flexiblen Kunststoff, insbesondere einem durch Vulkanisation aus natürlichem oder synthetischem Kautschuk hergestellten Produkt von hoher Elastizität, und ist vorzugsweise in Form eines Verbindungsschlauchs (Manschette) oder eines Balgs gebildet. Der flexible Verbindungsabschnitt 432 weist weiterhin bevorzugt die Form eines konischen Rings auf und verjüngt sich ausgehend von dem Einsetzabschnitt 431 in einer einem Boden des Fasses F zugewandten Richtung. Mit anderen Worten ist ein Durchmesser an einem dem Einsetzabschnitt 431 zugewandten oberen Ende des flexiblen Verbindungsabschnitts 432 größer als ein Durchmesser an einem dem Boden des Fasses F zugewandten unteren Ende des flexiblen Verbindungsabschnitts 432. Der flexible Verbindungsabschnitt 432 ist ein optionaler Bestandteil des Verbindungselements 43. Das Verbindungselement 43 kann alternativ auch ohne den flexiblen Verbindungsabschnitt 432 in Form eines rigiden bzw. starren Elements gebildet sein.

An dem dem Boden des Fasses F zugewandten unteren Ende des flexiblen Verbindungsabschnitts 432 ist der Durchgangsabschnitt 433 befestigt/aufgenommen, welcher einen Durchgang in das Innere des Fasses F definiert. Der Durchgangsabschnitt 433 umfasst eine zweite Dichteinrichtung 434. In der vorliegenden Ausführungsform ist die zweite Dichteinrichtung 434 vorzugsweise durch einen Dichtring 4341 gebildet.

Der Dichtring 4341 umläuft bevorzugt eine innere Kontur des unteren Endes des flexiblen Verbindungsabschnitts 432.

Innerhalb des Dichtrings 4341 ist vorzugsweise ein verstellbares Dichtelement 4342 angeordnet. Das verstellbare Dichtelement 4342 ist in der gezeigten Ausführungsform vorzugsweise ebenfalls durch eine torusförmige Blähdichtung gebildet.

Weiterhin umfasst die zweite Dichteinrichtung 434 einen in Fig. 3 gezeigten Pumpenanschluss 4343, über welchen Luft in die Blähdichtung eintreten oder austreten kann. Diesbezüglich ist der Pumpenanschluss 4343 vorzugsweise an die Druckluftversorgung angeschlossen, sodass der Luftdruck innerhalb der Blähdichtung erhöht werden kann. Darüber hinaus umfasst die zweite Dichteinrichtung 4341 eine nicht gezeigte Einstelleinrichtung, über welche der Luftdruck innerhalb der Blähdichtung einstellbar ist. Bei Erhöhen des Luftdrucks dehnt sich die Blähdichtung vorzugsweise aus, so dass eine Ausdehnung der Blähdichtung zunimmt, wohingegen sie sich bei Erniedrigung des Luftdrucks vorzugsweise entspannt, so dass die Ausdehnung der Blähdichtung abnimmt. Mit anderen Worten ist der durch den Durchgangsabschnitt 433 definierte Durchgang auf diese Weise über die zweite Dichteinrichtung 434 verstellbar. Die zweite Dichteinrichtung 434 ist ein Beispiel für die erfindungsgemäße Dichteinrichtung.

Durch Erhöhung des Luftdrucks innerhalb der Blähdichtung der zweiten Dichteinrichtung 434, dehnt sich diese aus und wird an das angrenzende Adapterstück 3 gedrückt. Auf diese Weise ist eine dichtende Verbindung zwischen dem im angedockten Zustand befindlichen Andockabschnitt 4 und dem Adapterstück 3 herstellbar. Somit kann durch das Zusammenwirken des Andockabschnitts 4 mit dem Adapterstück 3 ein abgeschlossener Innenraum innerhalb des Fasses F gebildet werden.

Durch Erniedrigung des Luftdrucks innerhalb der Blähdichtung entspannt sich diese und der Andockabschnitt 4 kann vom Adapterstück 3 gelöst werden. In der Folge kann der Andockabschnitt 4 durch die Versetzeinrichtung 6 von dem angedockten Zustand in den geöffneten Zustand versetzt werden.

Alternativ kann das Verbindungselement 43 bzw. lediglich die zweite Dichteinrichtung 434 auch direkt an/integral mit der rigiden Platte 41 vorgesehen sein. Insbesondere kann der Dichtring 4341 bevorzugt an einer dem Fass F zugewandten unteren Seite der rigiden Platte 41 in ein Inneres des Fasses F hineinragend befestigt sein und eine innere Kontur der Öffnung der rigiden Platte 41 umlaufen. Weiterhin kann der Dichtring 4341 auch innerhalb der Öffnung der rigiden Platte 41 eingesetzt sein, so dass dieser einen Durchmesser der Öffnung verkleinert. Mit anderen Worten kann die erfindungsgemäße Dichteinrichtung im vorstehend erläuterten Fall analog zur ersten Dichteinrichtung 42 gebildet sein, wobei eine Öffnung in der rigiden Platte 41 und eine Ausdehnung des verstellbaren Dichtelements 4342 dergestalt sind, dass die dichtende Verbindung mit dem Adapterstück 3 herstellbar ist.

Weiterhin umfasst der Andockabschnitt 4 bevorzugt ebenfalls einen Pumpenanschluss 44, welcher die rigide Platte 41 vorzugsweise durchdringt und eingerichtet ist, den Luftdruck innerhalb eines durch den Andockabschnitt 4 und das Adapterstück 3 innerhalb des Fasses F definierten abgeschlossenen Innenraum zu erniedrigen.

Durch Erniedrigung des Luftdrucks innerhalb des abgeschlossenen Innenraums wird vorzugsweise die flexible Außenhaut des Foliensacks/Liners L an eine Innenwandung des Fasses F angezogen. Auf diese Weise wird die flexible Außenhaut des Foliensacks/Liners L fixiert und eine Behinderung des Anwenders bei Entnahme des Produkts P durch den losen Foliensack/Liner L wird vermieden. Dies verbessert insbesondere die Handhabung der erfindungsgemäßen Entleerungsvorrichtung 2 bzw. des erfindungsgemäßen Entleerungssystems.

Der Pumpenanschluss 44 ist ein Beispiel für die erfindungsgemäße Absaugeinrichtung.

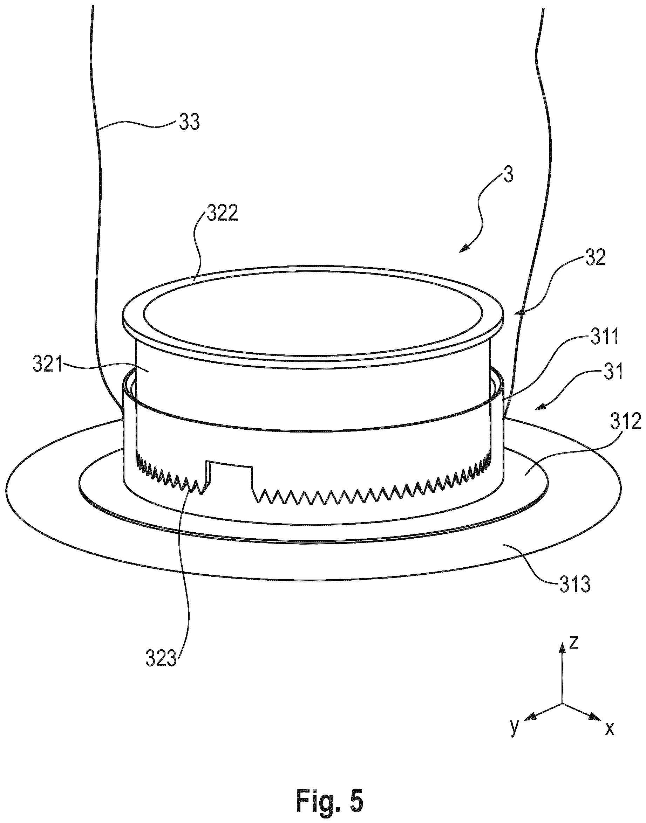

Nachfolgend wird das erfindungsgemäße Adapterstück 3 im Detail erläutert. Figur 5 zeigt eine perspektivische Ansicht des erfindungsgemäßen Adapterstücks 3.

Das Adapterstück 3 ist vorzugsweise durch einen Anwender manuell handzuhaben und wird bestimmungsgemäß dafür eingesetzt, den das Produkt P enthaltenden Foliensack/Liner L zu öffnen, um das Produkt P entnehmen zu können.

Das Adapterstück 3 umfasst vorzugsweise einen Befestigungsabschnitt 31, einen Trennabschnitt 32 und einen Folienschlauch 33. Der Befestigungsabschnitt 31 ist in Fig. 5 transparent dargestellt.

Der Befestigungsabschnitt 31 wird bei bestimmungsgemäßer Verwendung des Adapterstücks 3 an dem das Produkt P umschließenden Foliensack/Liner L, welcher in dem Fass F enthalten ist, befestigt.

Diesbezüglich umfasst der Befestigungsabschnitt 31 ein ringförmiges Anschlusselement 311, einen Flanschabschnitt 312 und eine Verschließfolie 313.

Das ringförmige Anschlusselement 311 definiert einen Durchgang, welcher so dimensioniert ist, dass der Trennabschnitt 32 in Richtung einer Achse bzw. Durchgangsachse in das ringförmige Anschlusselement 311 eingeführt werden kann.

Der Flanschabschnitt 312 erstreckt sich ausgehend von der dem Foliensack/Liner L bestimmungsgemäß zugewandten Seite des ringförmigen Anschlusselements 311 in Bezug auf die Durchgangsachse des Durchgangs radial nach außen. Der Flanschabschnitt 312 wird bei Befestigung des Adapterstücks 3 durch den Anwender an die Außenoberfläche des Foliensackes/Liners L gedrückt und dort befestigt.

Die Verschließfolie 313 ist auf der dem Foliensack/Liner L bestimmungsgemäß zugwandten Seite an dem ringförmigen Anschlusselement 311 und/oder dem Flanschabschnitt 312 befestigt. Die Verschließfolie 313 ist beispielsweise mit dem ringförmigen Anschlusselement 311 und oder dem Flanschabschnitt 312 fest verschweißt und/oder verklebt.

Die Verschließfolie 313 ist vorzugsweise so gebildet und befestigt, dass diese den Durchgang des ringförmigen Anschlusselements 311 auf der dem Foliensack/Liner L bestimmungsgemäß zugwandten Seite vollständig überspannt. Mit anderen Worten ist der Durchgang auf der dem Foliensack/Liner L bestimmungsgemäß zugewandten Seite vollständig durch die Verschließfolie 313 verschlossen.

Weiterhin ist die Verschließfolie 313 bevorzugt derart gebildet, dass sie als Befestigungsmittel zur Verbindung des Adapterstücks 3 mit der Außenoberfläche des Foliensacks/Liner L dienen kann. Hierfür ist an der dem Foliensack/Liner L bestimmungsgemäß zugwandten Seite bevorzugt eine Klebe- bzw. Klebstoffschicht ausgebildet, welche eingerichtet ist an der Außenoberfläche des Foliensacks/Liners L derart festzukleben, dass die Verschließfolie 313 vollständig oder zumindest abschnittsweise an der Außenoberfläche haftet und somit das erfindungsgemäße Adapterstück 3 an der Außenoberfläche des Foliensacks/Liners L befestigt ist. Die Erfindung ist auf keine bestimmte Art von Klebstoff eingeschränkt. Beispielsweise kann es sich bei der Klebstoffschicht um eine solche handeln, die durch eine Schutzfolie geschützt ist, um ein vorzeitiges Aushärten der Klebstoffschicht zu verhindert. Der Anwender kann diese Schutzfolie kurz vor Befestigung des Adapterstücks 3 von der Verschließfolie 313 abziehen und anschließend die Verschließfolie 313 an die Außenoberfläche des Foliensacks/Liners L andrücken, an welcher der Klebstoff in der Folge anhaftet und bevorzugt schnell aushärtet, um das Adapterstück 3 an der Außenoberfläche des Foliensacks/Liners L zu befestigen. Mögliche Klebstoffe sind beispielsweise Haftklebstoffe, wie sie beispielsweise bei Klebebändern zum Einsatz kommen, thermische Klebstoffe, die durch Bestrahlung mittels eines Heizstrahlers aushärten, oder beispielsweise UV Klebstoffe, die durch Bestrahlung mit UV-Licht aushärten.

Die Verschließfolie 313 besitzt eine Dicke in der Größenordnung erhältlicher Klebebänder und ist flächenmäßig größer als das ringförmige Anschlusselement 311 und/oder der Flanschabschnitt 312. Insbesondere besitzt die Verschließfolie 313 einen überstehenden Abschnitt, der sich ausgehend von dem ringförmigen Anschlusselement 311 oder dem Flanschabschnitt 312 in Bezug auf die Durchgangsachse radial nach außen erstreckt.

Der überstehende Abschnitt ist über den gesamten Umfang des ringförmigen Anschlusselements 311 oder des Flanschabschnitts 312 ausgebildet. Bevorzugt ist der überstehende Abschnitt über den gesamten Umfang hinweg konstant, d. h. der Abstand des Umfangs der Verschließfolie 313 bzw. des überstehenden Abschnitts zu dem Umfang des ringförmigen Anschlusselements 311 oder des Flanschabschnitts 312 ist über den gesamten Umfang hinweg konstant.

Der überstehende Abschnitt der Verschließfolie 313 sorgt für eine verbesserte Haftung/Befestigung des Adapterstücks 3 an der Außenoberfläche des Foliensacks/Liners L, weil er sich flexibel an Falten und Krümmungen der flexiblen Außenoberfläche anpasst.

Bevorzugt ist in die Verschließfolie 313 ein maschenartiges Gewebe integriert, dass die Verschließfolie 313 verstärkt und für eine sichere/reißfeste Befestigung des gesamten Adapterstücks 3 an dem Foliensack/Liner L sorgt.

Der bevorzugte Trennabschnitt 32 durchtrennt bei bestimmungsgemäßer Verwendung des Adapterstücks 3 den Foliensack/Liner L und macht das durch den Foliensack/Liner L umschlossene Produkt P zugänglich.

Diesbezüglich umfasst der Trennabschnitt 32 ein ringförmiges Gleitelement 321, einen Flanschabschnitt 322 und eine Trennstruktur 323.

Das ringförmige Gleitelement 321 definiert einen Durchgang, welcher so dimensioniert ist, dass ein Ende der Förderleitung 7, welche später näher erläutert wird, durch den Durchgang hindurch in den geöffneten Foliensack/Liner L zum Entleeren des Produkts P einführbar ist. Weiterhin kann das ringförmige Gleitelement 321 vorzugsweise derart in den Durchgang des ringförmigen Anschlusselements 311 eingesetzt werden, dass dieses entlang der Durchgangsachse versetzbar ist bzw. an einer Innenoberfläche des ringförmigen Anschlusselements 311 gleitend gelagert ist. Mit anderen Worten sind das ringförmige Anschlusselement 311 des Befestigungsabschnitt 31 und das ringförmige Gleitelement 321 des Trennabschnitts 32 koaxial zueinander geführt.

Der Flanschabschnitt 322 des Trennabschnitts erstreckt sich ausgehend von einer dem Foliensack/Liner L bestimmungsgemäß abgewandten Seite des ringförmigen Gleitelements 321 in Bezug auf die Durchgangsachse des Durchgangs radial nach außen. Der Flanschabschnitt 322 begrenzt einen Weg, in welchem der Trennabschnitt 32 in Bezug auf den Befestigungsabschnitt 31 in der dem Foliensack/Liner L zugewandten Richtung versetzt werden kann, indem der Flanschabschnitt 322 beim Versetzen an ein oberes dem Foliensack/Liner 3 bestimmungsgemäß abgewandtes Ende des ringförmigen Anschlusselements 311 anschlägt.

Die Trennstruktur 323 ist an einer dem Foliensack/Liner L bestimmungsgemäß zugwandten Seite des ringförmigen Gleitelements 321 gebildet und ist eingerichtet, die Außenoberfläche des Foliensacks/Liners L und gegebenenfalls die Verschließfolie 313 bei bestimmungsgemäßem Versetzen des ringförmigen Gleitkörpers 321 in Bezug auf das ringförmige Anschlusselement 311 des Befestigungsabschnitts 31 in der dem Foliensack/Liner L zugewandten Richtung derart aufzutrennen, dass das durch den Foliensack/Liner L umschlossene Produkt P zugänglich ist. Diesbezüglich ist die Trennstruktur 323 in Form einer Vielzahl von Zacken gebildet, welche an der bestimmungsgemäß dem Foliensack/Liner L zugewandten Kante des ringförmigen Gleitkörpers 321 umlaufend gebildet sind. Neben den Zacken sind auch weitere Strukturen denkbar, welche geeignet sind, einen entsprechenden Foliensack/Liner L bzw. die Verschließfolie 313 zu durchstoßen/zu durchtrennen.

Die Trennstruktur 323 ist über den gesamten Umlauf der Kante oder bevorzugt, wie in Fig. 5 veranschaulicht, lediglich abschnittsweise gebildet. Indem die Trennstruktur 323 lediglich abschnittsweise auf der Kante ausgebildet ist, wird lediglich der betreffende Abschnitt des Foliensacks/Liners L bzw. der Verschließfolie 313, der mit der abschnittsweise gebildeten Trennstruktur 323 in Berührung gelangt, durchstoßen/durchtrennt, während der übrige Teil des Umfangs ungetrennt verbleibt. Der durchtrennte Teil des Foliensacks/Liners L bzw. der Verschließfolie 313 bleibt somit mit dem übrigen Teil des Foliensacks/Liners L verbunden. Zum Zugang zum Produkt P reicht ein Aufklappen des durchtrennten Teils des Foliensacks/Liners L bzw. der Verschließfolie 313 durch den Anwender.

Das teilweise Durchtrennen hat den Vorteil, dass der durchtrennte Teil am Foliensack/Liner L verbleibt und bei Entleeren des Foliensacks/Liners L nicht durch die Förderleitung 7 abgesaugt werden kann.

Der Trennabschnitt 32 ist ein optionaler Bestandteil des Adapterstücks 3. Alternativ kann das Adapterstück 3 auch ohne den Trennabschnitt 32 gebildet sein. In diesem Fall wird die Verschließfolie 313 und/oder der Foliensack/Liner L vorzugsweise mittels der Förderleitung 7 durchtrennt/durchstoßen. Diesbezüglich kann vorzugsweise ein entsprechendes Trennelement, beispielsweise ein ausfahrbares Messer, an der Förderleitung 7 vorgesehen sein, welches eingerichtet ist, die Verschließfolie 313 und/oder den Foliensack/Liner L zu durchtrennen.

Der in Fig. 5 gezeigte Folienschlauch 33 erstreckt sich ausgehend von dem ringförmigen Anschlusselement 311 des Befestigungsabschnitts 31 in der dem Foliensack/Liner L bestimmungsgemäß abgewandten Richtung. Insbesondere ist der Folienschlauch 33 an einem Ende an der/m dem Foliensack/Liner L bestimmungsgemäß abgewandten Seite/Ende des ringförmigen Anschlusselements 311 befestigt. An dem anderen Ende ist der Folienschlauch 33 vorzugsweise offen.

Der Folienschlauch 33 kann beispielsweise an dem ringförmigen Anschlusselement 311 festgeklemmt und/oder mit diesem fest verschweißt und/oder verklebt sein. Insbesondere kann in dem ringförmigen Anschlusselement 311 eine umlaufende Nut gebildet sein, über welche der unbefestigte Folienschlauch 33 gestülpt/geschoben werden kann und mittels eines flexiblen O-Rings befestigbar ist.

An einer dem ringförmigen Anschlusselement 311 abgewandten Seite des ist der Folienschlauch 33 bevorzugt mit dessen offenem Ende an der Förderleitung 7 befestigbar.

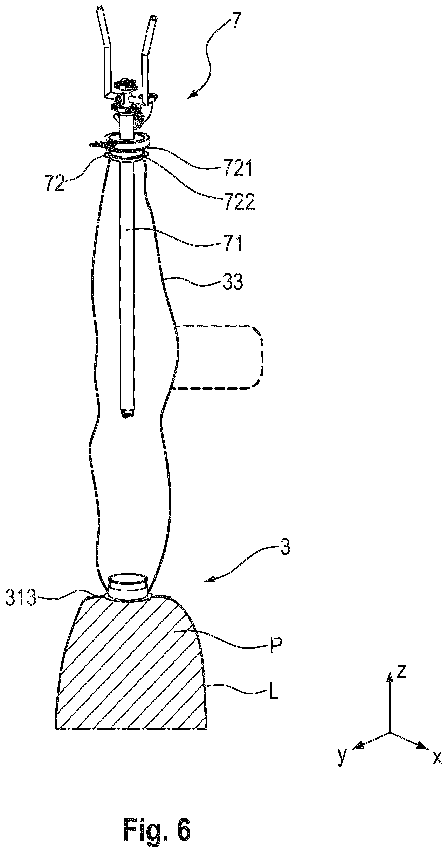

Die Figur 6 zeigt eine perspektivische Ansicht, in welcher der Folienschlauch 33 des erfindungsgemäßen Adapterstücks 3 beispielhaft an der Förderleitung 7 der erfindungsgemäßen Entleerungsvorrichtung 2 befestigt ist.

Die Förderleitung 7 ist derart eingerichtet, dass ein Ende der Förderleitung 7 vom Anwender durch den durch das Adapterstück 3 gebildeten Durchgang hindurch in den das Produkt P enthaltenden geöffneten Foliensack/Liner L einführbar ist, um das Produkt P aus diesem zu entnehmen/abzusaugen.

Die Förderleitung 7 der erfindungsgemäßen Entleerungsvorrichtung 2 kann insbesondere bestimmungsgemäß an eine pneumatische Förderanlage angeschlossen werden, die eine Absaugung des Produkts P durch die Förderleitung 7 hindurch ermöglicht. Auf diese Weise kann das Produkt P einer nicht gezeigten weiterverarbeitenden Anlage zugeführt werden.

Bevorzugt umfasst die Förderleitung 7 ein Saugrohr 71 und einen Trägerabschnitt 72.

Das Saugrohr 71 legt bevorzugt ein Förderende, mit anderen Worten einen Abschnitt, an dem das Produkt P die erfindungsgemäße Entleerungsvorrichtung 2 verlässt, und ein Eintrittsende, an dem das Produkt P ausgehend von dem Foliensack/Liner L in das Saugrohr 71 und damit in die erfindungsgemäße Entleerungsvorrichtung 2 eintritt, fest. Das Saugrohr 71 kann eine feste Länge haben oder auch ein Teleskop-Saugrohr mit variabler Länge sein.

Darüber hinaus umfasst die Förderleitung 7 vorzugsweise den Trägerabschnitt 72. In der gezeigten Ausführungsform ist der Trägerabschnitt 72 umlaufend um das Saugrohr 71 gebildet und ermöglicht die Befestigung des offenen Endes des Folienschlauchs 33 an der Förderleitung 7.

In der gezeigten Ausführungsform umfasst der Trägerabschnitt 72 diesbezüglich zwei umlaufende Nuten 721 und 722. Zur Befestigung des Folienschlauchs 33 kann dieser über den Trägerabschnitt 72 geschoben werden und in einer der beiden Nuten 721 bzw. 722 mittels eines flexiblen O-Rings befestigt werden. Die Handhabung des Folienschlauchs 33 im Zusammenhang mit dem Trägerabschnitt 72 wird nachfolgend im Zusammenhang mit dem Ablauf des Andockens/Entleerens des Fasses F noch ausführlich erläutert.

Der Folienschlauch 33 bildet im befestigten Zustand bevorzugt zusammen mit dem Adapterstück 3 einen gegenüber der Außenumgebung abgedichteten Aufnahmeraum, in dem das Saugrohr 71 der Förderleitung 7 zumindest abschnittsweise aufgenommen ist. Insbesondere ist das Eintrittsende des Saugrohrs 71 innerhalb des Aufnahmeraums aufgenommen. Auf diese Weise verbleibt beim Entleeren aufgewirbeltes Produkt P innerhalb des Aufnahmeraums und kann nicht an die Außenumgebung austreten. Durch Bilden des Aufnahmeraums durch Zusammenwirken der Förderleitung 7, des Adapterstücks 3 und des Folienschlauchs 33 kann daher auf das Vorsehen eines Isolators verzichtet werden.

Weiterhin kann der Folienschlauch 33 bevorzugt einen weiteren abtrennbaren Aufnahmeraum umfassen, welcher in Fig. 6 mittels gestrichelter Linien angedeutet ist. In diesen bevorzugten weiteren abtrennbaren Aufnahmeraum können vorzugsweise Verbrauchsmaterialen aus einem vorangegangenen Entleerungsprozess, insbesondere Reste eines vorangegangenen Folienschlauchs und/oder etwaige O-Ringe, aufgenommen werden und anschließend kann dieser weitere abtrennbare Aufnahmeraum gegenüber dem übrigen durch den Folienschlauch 33 gebildeten Aufnahmeraum abgetrennt bzw. verschlossen werden. Das Abtrennen bzw. Verschließen kann beispielsweise durch Verschweißen oder mittels eines oder zwei handelsüblicher Kabelbinder erfolgen. Insbesondere kann der weitere abtrennbare Aufnahmeraum, wie in Fig. 6 anhand der gestrichelten Linie angedeutet, anhand einer T-förmigen Ausstülpung bzw. T-förmig angebundenen Seitenschlauchs gebildet sein. Der weitere abtrennbare Aufnahmeraum ist ein optionaler Bestandteil des Folienschlauchs 33. Alternativ kann der abgetrennte Aufnahmeraum auch durch einen Teil der Wandung des Folienschlauchs 33 gebildet werden. In diesem Fall verjüngt sich allerdings der Folienschlauch 33 in dem Bereich, in welcher der abgetrennte Aufnahmeraum gebildet wird.

Der Folienschlauch 33 ist bevorzugt durch eine transparente Folie gebildet. Somit kann der Anwender in den Aufnahmeraum und/oder den weiteren abtrennbaren/abgetrennten Aufnahmeraum einsehen.

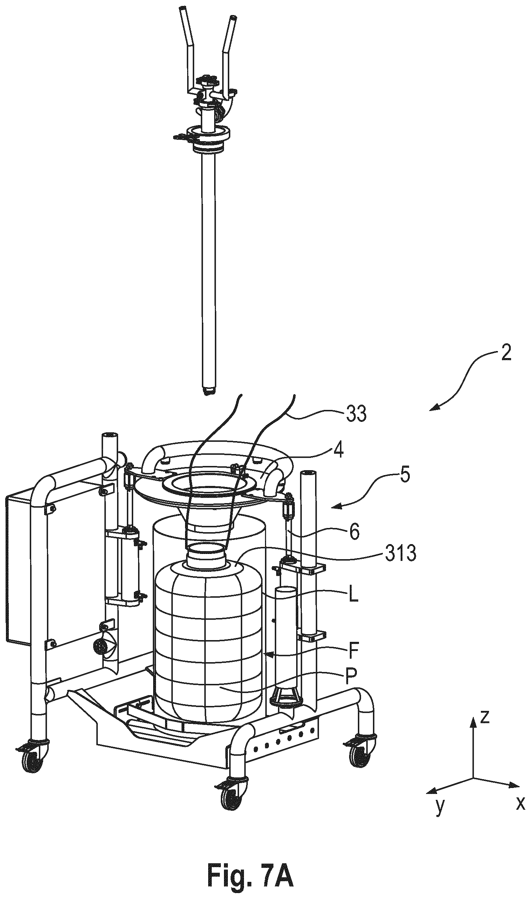

Die Figuren 7 A bis J zeigen das bestimmungsgemäße Verfahren zum Andocken der erfindungsgemäßen Entleerungsvorrichtung 2 an ein das Produkt P enthaltendes Fass F unter Verwendung des erfindungsgemäßen Adapterstücks 3.

Figur 7 A beschreibt einen bevorzugten ersten Schritt. Das Fass F wird durch den Anwender, wie veranschaulicht, in den Halterungsrahmen 5 der erfindungsgemäßen Entleerungsvorrichtung 2 eingesetzt und mit den vorgesehenen Mitteln zur Positionierung und Fixierung in dessen bestimmungsgemäße Position gebracht. Der Andockabschnitt 4 ist zu diesem Zeitpunkt durch die Versetzeinrichtung 6 in den geöffneten Zustand versetzt. Ein Deckel des Fasses F wird spätestens zu diesem Zeitpunkt geöffnet und entfernt, so dass das Innere des Fasses F zugänglich ist.

Anschließend zieht der Anwender bevorzugt die Schutzfolie von der Verschließfolie 313 des erfindungsgemäßen Adapterstücks ab 3 und führt dieses vorzugsweise durch den durch den Andockabschnitt 4 gebildeten Durchgang in das Innere des Fasses F ein. Daraufhin befestigt der Anwender das Adapterstück 3 über die an der Verschließfolie 313 vorgesehene Klebstoffschicht an der Außenoberfläche des Foliensacks/Liners L.

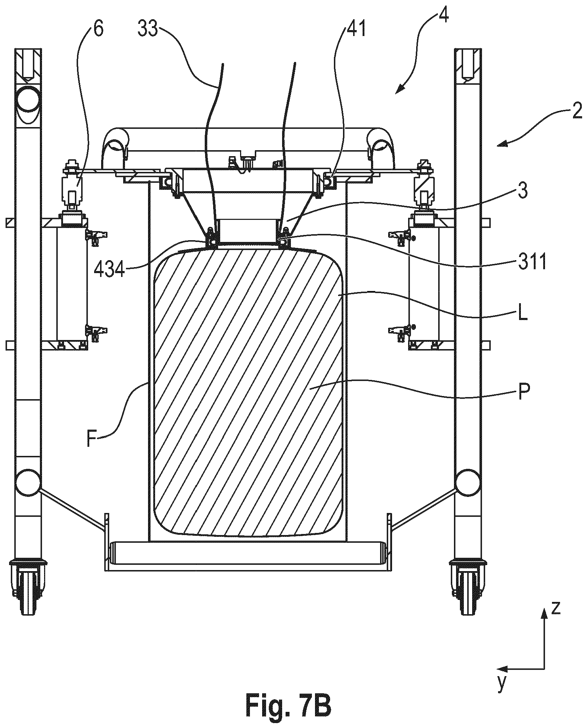

Figur 7 B veranschaulicht einen bevorzugten zweiten Schritt und zeigt eine Schnittdarstellung der erfindungsgemäßen Entleerungsvorrichtung 2 entlang der X-Z-Ebene. In dem bevorzugten zweiten Schritt wird der Andockabschnitt 4 unter Verwendung der Versetzeinrichtung 6 abgesenkt und in den angedockten Zustand versetzt. Die rigide Platte 41 des Andockabschnitts wird dabei dichtend auf den oberen Rand des Fasses F gedrückt.

Anschließend wird der Luftdruck innerhalb der Blähdichtung der zweiten Dichteinrichtung 434 erhöht, so dass sich diese ausdehnt und an das angrenzende ringförmige Anschlusselement 311 des Adapterstück 3 gedrückt wird. Das ringförmige Anschlusselement 311 ist ein Beispiel für den erfindungsgemäßen Dichtabschnitt. Auf diese Weise wird eine dichtende Verbindung zwischen dem im angedockten Zustand befindlichen Andockabschnitt 4 und dem Adapterstück 3 hergestellt. Somit kann durch das Zusammenwirken des Andockabschnitts 4 mit dem Adapterstück 3 ein abgeschlossener Innenraum innerhalb des Fasses F gebildet werden.

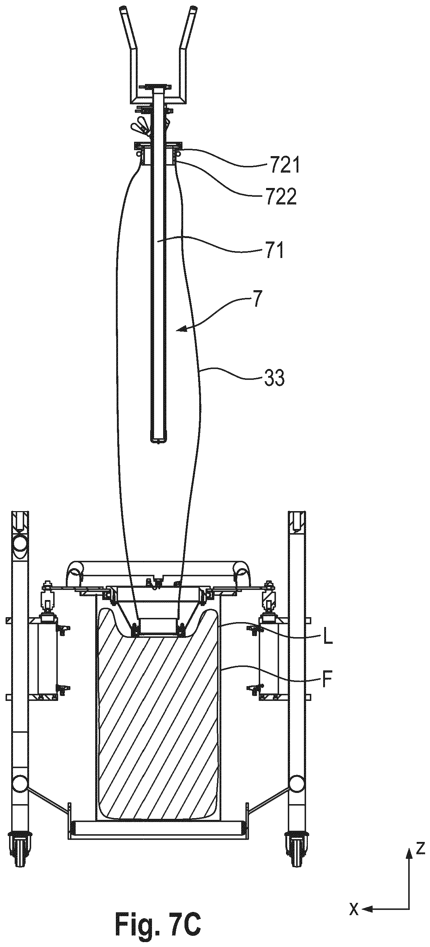

Wie in Figur 7 C veranschaulicht führt/schiebt der Anwender den Folienschlauch 33 des Adapterstücks 3 über das Saugrohr 71 der Förderleitung 7 und befestigt dieses mittels eines flexiblen O-Rings an einer der Nuten 721 oder 722 des Trägerabschnitts 72. Bevorzugt befestigt der Anwender den Folienschlauch 33 an der unteren Nut 722 des Trägerabschnitts.

Somit ist durch Zusammenwirken der Förderleitung 7, des Adapterstücks 3 und des Folienschlauchs 33 nunmehr der gegenüber der Außenumgebung abgedichtete Aufnahmeraum ausgebildet, in dem das Saugrohr 71 zumindest abschnittsweise aufgenommen ist. Insbesondere ist das Eintrittsende, an dem das Produkt P ausgehend von dem Foliensack/Liner L in das Saugrohr 71 eintritt, aufgenommen.

Weiterhin kann nun über den Pumpenanschluss 44 an dem Andockabschnitt 4 der Luftdruck innerhalb des abgeschlossenen Innenraums 4 erniedrigt werden, sodass die flexible Außenhaut des Foliensacks/Liners L an die Innenwandung des Fasses F angezogen wird.

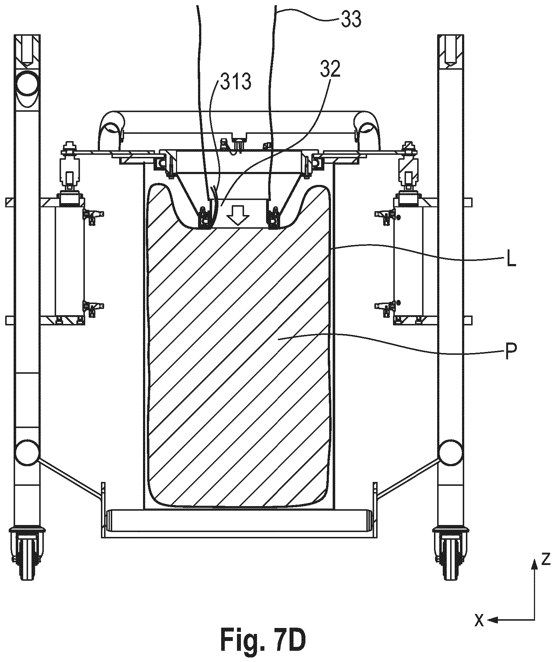

In einem nächsten Schritt drückt der Anwender, wie durch den Pfeil in Figur 7 D veranschaulicht, den Trennabschnitt 32 des Adapterstücks 3 zum Durchtrennen des Foliensacks/Liners L und gegebenenfalls der Verschließfolie 313 in Bezug auf das den Befestigungsabschnitt 31 nach unten. Somit wird der Foliensack/Liner L bzw. die Verschließfolie 313 zumindest abschnittsweise durchtrennt und das zu entleerende Produkt P wird zugänglich gemacht.

Anschließend klappt der Anwender den durchtrennten Teil des Foliensacks/Liner L und gegebenenfalls der der Verschließfolie 313 auf.

Der Anwender führt das im Zusammenhang mit Fig. 7 D erläuterte Vorgehen unter Verformung des flexiblen Folienschlauchs 33 durch. Dieser schirmt den Anwender von dem Produkt P ab. Somit kann auf einen Isolator verzichtet werden.

Das Fass F und der darin aufgenommene, das Produkt P enthaltende Foliensack/Liner L sind somit für die Entleerung vorbereitet.

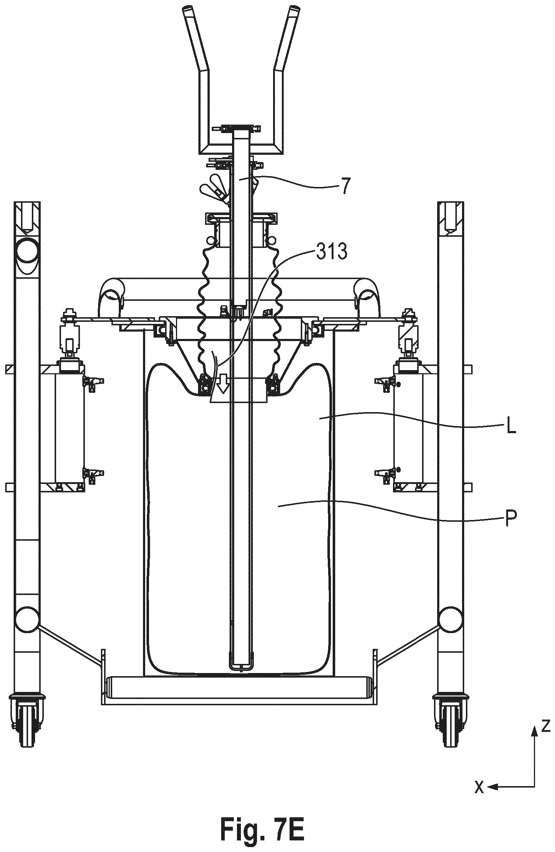

Wie in Figur 7 E gezeigt, führt der Anwender anschließend die Förderleitung 7 in den Foliensack/Liner L ein und entleert diesen.

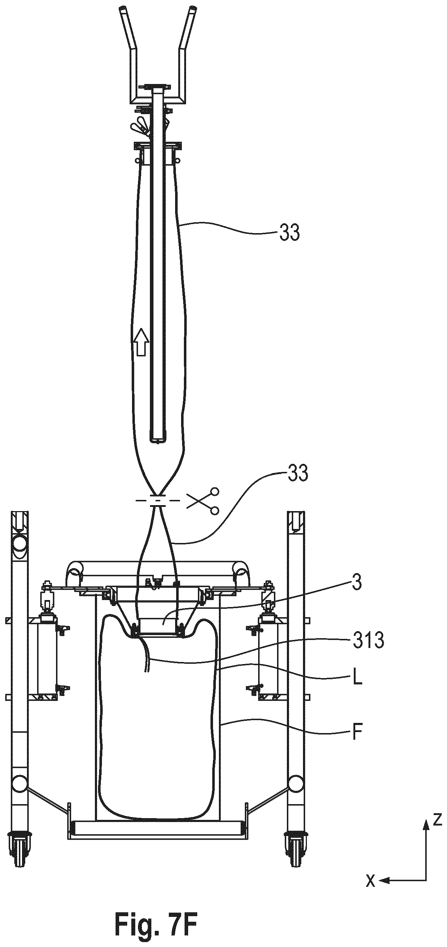

Anschließend zieht der Anwender die Förderleitung 7, wie in Figur 7 F gezeigt, wieder aus dem entleerten Foliensack/Liner L heraus.

Weiterhin verschließt und durchtrennt der Anwender den Folienschlauch 33. Diesbezüglich schnürt der Anwender den Folienschlauch 33 in einem Bereich zwischen dem Adapterstück 3 und dem Trägerabschnitt 72, bevorzugt unterhalb des Eintrittsendes des Saugrohr 71, zusammen und verschließt den Folienschlauch 33 an dieser Stelle, beispielsweise durch ein Verschweißgerät oder durch zwei handelsübliche Kabelbinder. Das Durchtrennen erfolgt an der verschlossenen Stelle, beispielsweise durch eine Schere. Somit entstehen zwei voneinander getrennte, gegenüber der Außenumgebung abgeschlossene Aufnahmeräume.

In einem nächsten Schritt gleicht der Anwender den Luftdruck innerhalb des Fasses F über den Pumpenanschluss 44 wieder an den Umgebungsdruck an, so dass sich die flexible Außenhaut des Foliensacks/Liners L von der Innenwand des Fasses F löst.

Anschließend versetzt der Anwender den Andockabschnitt 4 über die Versetzeinrichtung 6 nach oben zurück in den geöffneten Zustand.

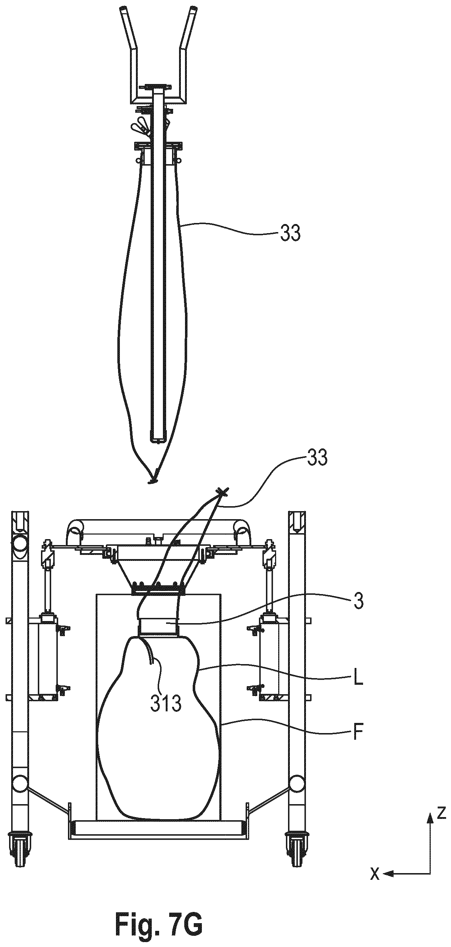

Somit resultiert der in Figur 7 G gezeigte Zustand.

In diesem Zustand entnimmt der Anwender den Foliensack/Liner L gemeinsam mit dem daran befestigten Adapterstück 3 und dem daran verbliebenen durchtrennten und verschlossenen Rest des Folienschlauchs 33 aus dem Inneren des Fasses F entsorgt diesen. Das erfindungsgemäße Adapterstück 3 ist folglich bevorzugt nicht wiederverwendbares Verbrauchsmaterial.

Da der Foliensack/Liner L, das daran befestigte Adapterstück 3 und der Rest des Folienschlauchs 33 einen geschlossenen Aufnahmeraum bilden, kommt der Anwender nicht mit dem darin befindlichen restlichen Produkt P in Kontakt.

Das entleerte Fass F kann anschließend von dem Halterungsrahmen 5 entnommen werden.

Der andere, an dem Trägerabschnitt 72 der Förderleitung 7 befestigte Rest der Folienschlauchs 33 verbleibt vorerst.

Bevorzugt kann nun ein neues zu entleerendes Fass F in den Halterungsrahmen 5 eingesetzt werden, wobei folgende Schritte erforderlich sind.

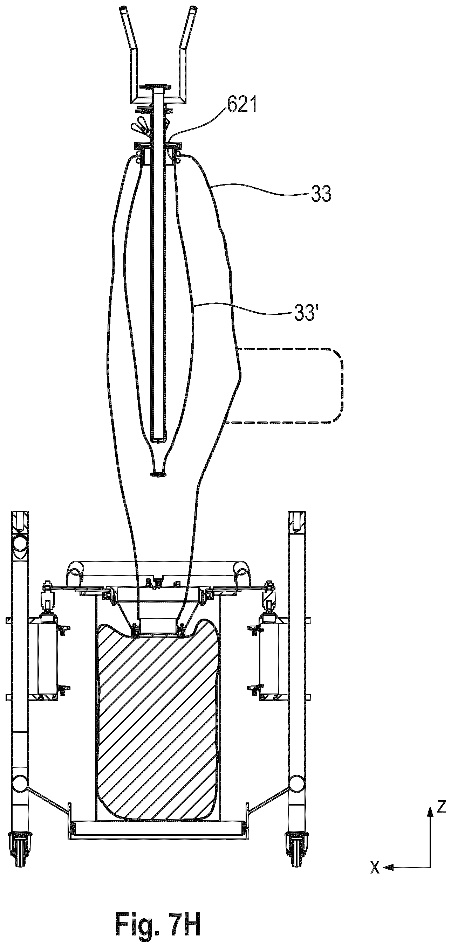

In Figur 7 H ist ein neu eingesetztes Fass F gezeigt, bei welchem die im Zusammenhang mit den Figuren 7 A und B beschriebenen Schritte bereits durch den Anwender vollzogen wurden.

Wie gezeigt schiebt der Anwender nun den Folienschlauch 33 über den die Förderleitung 7 einschließenden Rest des Folienschlauchs 33' aus dem vorangegangenen Entleerungsprozess und befestigt diesen mittels eines weiteren flexiblen O-Rings an der oberen Nut 721 des Trägerabschnitts 72.

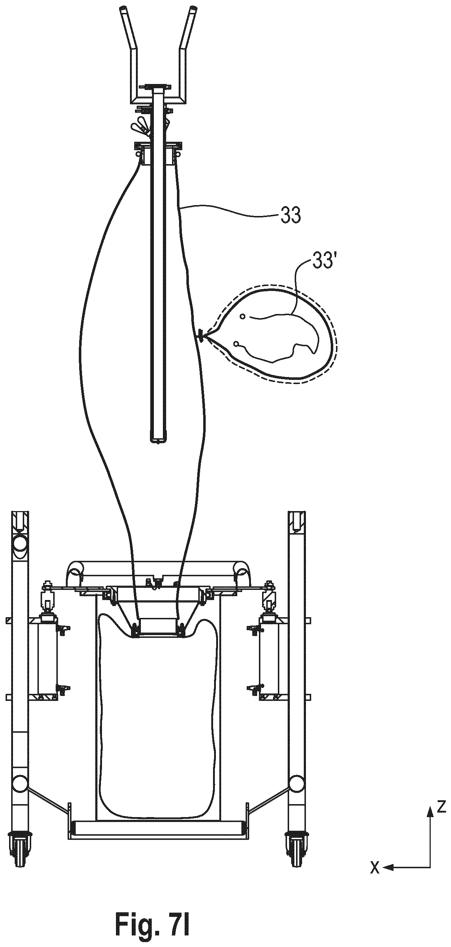

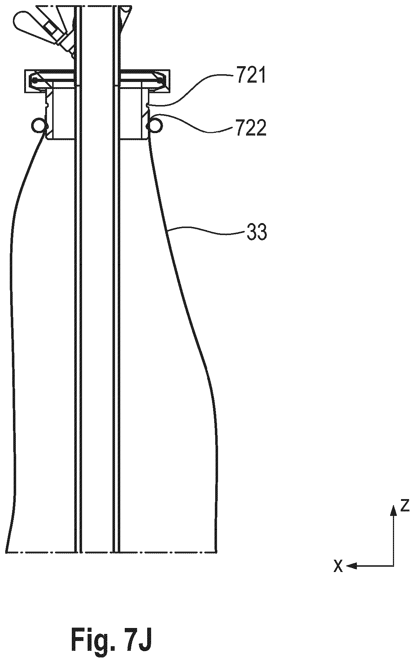

Anschließend löst der Anwender den flexiblen O-Ring, welcher den Rest des Folienschlauchs 33' an der unteren Nut 722 des Trägerabschnitts 72 befestigt, und schließt verschließt diesen, wie in Figur 7 I gezeigt, innerhalb des abtrennbaren Aufnahmeraums des neuen Folienschlauchs 33. Diesbezüglich wird der neue Foliensack 33 an dieser Stelle beispielsweise wieder verschweißt oder mittels eines oder zwei handelsüblichen Kabelbindern abgeschnürt. Dieser nunmehr abgetrennte Aufnahmeraum kann am neuen Folienschlauch 33 verbleiben oder abgetrennt werden.

Abschließend versetzt der Anwender den den neuen Folienschlauch 33 befestigenden flexiblen O-Ring, wie in Figur 7 J gezeigt, von der oberen Nut 721 auf die untere Nut 722 des Trägerabschnitts 72 und führt die im Zusammenhang mit den Figuren 7 D bis 7 G erläuterten Schritte zum Entleeren des Fasses F aus.

### Bezugszeichenliste

- 1: Entleerungssystem
- 2: Entleerungsvorrichtung
- 3: Adapterstück
- 31: Befestigungsabschnitt
- 311: ringförmiges Anschlusselement
- 312: Flanschabschnitt
- 313: Verschließfolie
- 32: Trennabschnitt
- 321: ringförmiges Gleitelement
- 322: Flanschabschnitt
- 323: Trennstruktur
- 33: Folienschlauch
- 4: Andockabschnitt
- 41: rigide Platte
- 42: erste Dichteinrichtung
- 421: Dichtring
- 422: verstellbares Dichtelement
- 423: Pumpenanschluss
- 43: flexibles Verbindungselement
- 431: Einsetzabschnitt
- 4311: ringförmiger Abschnitt
- 4312: Flansch
- 432: flexibler Verbindungsabschnitt
- 433: Durchgangsabschnitt

- 434: zweite Dichteinrichtung
- 4341: Dichtring
- 4342: verstellbares Dichtelement
- 4343: Pumpenanschluss
- 44: Pumpenanschluss
- 5: Halterungsrahmen
- 6: Versetzeinrichtung
- 61, 62: Pneumatikzylinder
- 7: Förderleitung
- 71: Saugrohr
- 72: Trägerabschnitt
- 721, 722: Nut
- F: Fass
- P: Produkt
- L: Foliensack/Liner

## Patentansprüche

1. Entleerungsvorrichtung (2) zum Entleeren eines ein Produkt (P) enthaltenden Behälters (F), umfassend:
einen Andockabschnitt (4) zum Andocken an einen zu entleerenden rigiden Behälter (F), insbesondere ein Fass, wobei in dem Andockabschnitt (4) ein Durchgang mit einer verstellbaren Dichteinrichtung (434) gebildet ist, wobei
der Durchgang derart über die Dichteinrichtung (434) verstellbar ist, dass ein Adapterstück (3), welches an einem das Produkt (P) umschließenden flexiblen Behältnis (L), insbesondere einem Liner oder einem Foliensack, im Inneren des rigiden Behälters (F) befestigt ist, derart innerhalb des Durchgangs fixierbar ist, dass ein durch den Andockabschnitt (4) und den rigiden Behälter (F) definierter abgeschlossener Innenraum gegenüber einer Außenumgebung abgedichtet ist.

2. Entleerungsvorrichtung (2) gemäß Anspruch 1, wobei
die Dichteinrichtung (434) durch eine Blähdichtung gebildet ist, welche den Durchgang umläuft.

3. Entleerungsvorrichtung (2) gemäß Anspruch 1 oder 2, wobei
an dem Andockabschnitt (4) eine Absaugeinrichtung (44) vorgesehen ist, welche eingerichtet ist, einen Umgebungsdruck in dem abgeschlossenen Innenraum derart abzusenken, dass das flexible Behältnis (L) zumindest abschnittsweise an einer Innenwandung des rigiden Behälters (F) anliegt.

4. Entleerungsvorrichtung (2) gemäß einem der Ansprüche 1 bis 3, wobei
die Entleerungsvorrichtung (2) ferner eine Förderleitung (7) umfasst, welche zur Entnahme des Produkts (P) durch den Durchgang des Andockabschnitts (4) sowie durch das Adapterstück (3) hindurch in das das Produkt (P) enthaltende flexible Behältnis (L) einführbar ist.

5. Entleerungsvorrichtung (2) gemäß einem der Ansprüche 1 bis 4, wobei
der Andockabschnitt (4) eine rigide Platte (41), welche an einer Öffnung des rigiden Behälters (F) befestigbar ist, ein flexibles Verbindungselement (43) und einen Durchgangsabschnitt (433), welcher den Durchgang bildet und die Dichteinrichtung (434) aufnimmt, umfasst, wobei
die rigide Platte (41) und der Durchgangsabschnitt (433) derart über das flexible Verbindungselement (43) verbunden sind, dass Abweichungen in einem Abstand und/oder einer relativen Positionierung zwischen dem den Durchgang bildenden Durchgangsabschnitt (433) und dem an dem flexiblen Behältnis (L) befestigten Adapterstück (3) beim Fixieren durch Verformung des flexiblen Verbindungselements (43) ausgleichbar sind.

6. Entleerungsvorrichtung (2) gemäß Anspruch 5, wobei
die rigide Platte (41) einen weiteren Durchgang ausbildet, an welchem eine weitere verstellbare Dichteinrichtung (42) gebildet ist, wobei
der weitere Durchgang derart über die weitere Dichteinrichtung (42) verstellbar ist, dass das flexible Verbindungselement (43) innerhalb des weiteren Durchgangs zur Verbindung mit der rigiden Platte (41) fixierbar ist.

7. Entleerungsvorrichtung (2) nach einem der Ansprüche 1 bis 6, wobei
die Entleerungsvorrichtung (2) einen Halterungsrahmen (5) aufweist, wobei
an dem Halterungsrahmen (5) eine Versetzeinrichtung (6) vorgesehen ist, welche eingerichtet ist, den Andockabschnitt (4) entlang einer Längsachse des rigiden Behälters (F) derart gegenüber dem rigiden Behälter (F) zu versetzen, dass der Andockabschnitt (4) einen geöffneten Zustand oder einen angedockten Zustand einnimmt.

8. Adapterstück (3) zum Befestigen an ein ein Produkt (P) umschließendes flexiblen Behältnis (L), umfassend:
einen Befestigungsabschnitt (31), welcher an ein das Produkt umschließendes flexibles Behältnis (L), insbesondere einen Liner oder einen Foliensack, befestigbar ist, und
einen Dichtabschnitt (311), welcher eingerichtet ist, derart mit einer verstellbaren Dichteinrichtung (434) eines Andockabschnitts (4) einer Entleerungsvorrichtung (2) zusammenzuwirken, dass eine abgeschlossene/abgedichtete Verbindung zwischen dem Dichtabschnitt (311) und der Dichteinrichtung (434) herstellbar ist.

9. Adapterstück (3) nach Anspruch 8 ferner umfassend eine Klebstoffschicht zur Befestigung an einer Außenoberfläche des flexiblen Behältnisses (L).

10. Adapterstück (3) nach Anspruch 9, wobei
die Klebstoffschicht auf einer an dem Befestigungsabschnitt (31) befestigten Verschließfolie (313) gebildet ist, welche radial nach außen über den Befestigungsabschnitt (31) übersteht.

11. Adapterstück (3) nach einem der Ansprüche 8 bis 10, wobei
das Adapterstück (3) einen Trennabschnitt (31) umfasst, welcher eingerichtet ist, das flexible Behältnis (L) zumindest abschnittsweise aufzutrennen, um ein Inneres des flexiblen Behältnisses (L) zum Entnehmen des Produkts (P) zugänglich zu machen.

12. Adapterstück (3) nach den Ansprüchen 10 und 11, wobei
der Befestigungsabschnitt (31) einen Durchgang definiert, der so dimensioniert ist, dass der Trennabschnitt (32) in den Durchgang des Befestigungsabschnitts einführbar und innerhalb des Durchgangs geführt ist.

13. Adapterstück (3) nach einem der Ansprüche 8 bis 12, wobei
an dem Adapterstück (3) eine schlauchförmige Folie (33) befestigt ist, welche über eine Förderleitung (7), welche zur Entnahme des Produkts (P) durch das Adapterstück (3) hindurch in das das Produkt (P) enthaltende flexible Behältnis (L) einführbar ist, führbar ist und an einem an der Förderleitung (7) ausgebildeten Trägerabschnitt (72) befestigbar ist.

14. Ein Entleerungssystem (1) zum Entleeren eines ein Produkt (P) enthaltenden Behälters (F) umfassend:
die Entleerungsvorrichtung (2) gemäß einem der Ansprüche 1 bis 6 und das Adapterstück (3) nach einem der Ansprüche 7 bis 10.

15. Verfahren zum Andocken einer Entleerungsvorrichtung (2) an einen ein Produkt enthaltenden Behälter (F), umfassend die folgenden Schritte:
Einführen eines Adapterstücks (3) in ein Inneres eines ein Produkt (P) enthaltenden zu entleerenden rigiden Behälters (F), insbesondere ein Fass;
Befestigen des Adapterstücks (3) an einem das Produkt (P) umschließenden flexiblen Behältnis (L), insbesondere ein Liner oder ein Foliensack, im Inneren des rigiden Behälters (F),
Andocken eines Andockabschnitts (4) an den zu entleerenden rigiden Behälter (F), wobei in dem Andockabschnitt (4) ein Durchgang mit einer verstellbaren Dichteinrichtung (434) gebildet ist, und
Verstellen der Dichteinrichtung (434) derart, dass das Adapterstück (3) derart innerhalb des Durchgangs fixierbar ist, dass ein durch den Andockabschnitt (4) und den rigiden Behälter (F) definierter abgeschlossener Innenraum gegenüber einer Außenumgebung abgedichtet ist.
